# EUROPÄISCHE PATENTANMELDUNG

(11) **EP 4 365 465 A1**
(43) Veröffentlichungstag der Anmeldung: **08.05.2024**
(21) Anmeldenummer: 23207679.4
(22) Anmeldetag: 03.11.2023
(51) Int. Cl.: F16H 49/00

(54) **GETRIEBEVORRICHTUNG**

(30) Priorität: 03.11.2022 LU 502996
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft eine Getriebevorrichtung mit einem Getriebe, das einen innenverzahnten Getriebeaußenring aufweist, und mit einem den Getriebeaußenring umgebenden Strukturbauteil, insbesondere Gehäusebauteil, an dem der Getriebeaußenring drehfest befestigt ist. Die Getriebevorrichtung, zeichnet sich dadurch aus, dass der Getriebeaußenring relativ zu dem Gehäusebauteil radial beweglich befestigt ist.

## Beschreibung

Die Erfindung betrifft eine Getriebevorrichtung mit einem Getriebe, das einen innenverzahnten Getriebeaußenring aufweist, und mit einem den Getriebeaußenring umgebenden Strukturbauteil, insbesondere Gehäusebauteil, an dem der Getriebeaußenring drehfest befestigt ist.

Bei vielen Getriebeanwendungen ist ein Getriebeaußenring eines Getriebes drehfest in oder an einem Strukturbauteil, beispielsweise in einem Gehäusebauteil oder an einem Halter, befestigt, insbesondere um ein Antriebs- und/oder ein Abtriebsdrehmoment des Getriebes abzustützen, während andere Getriebebauteile relativ zu dem Gehäuse beweglich, insbesondere rotierbar, gelagert sind. Das Strukturbauteil wird zumeist an übergeordneten Strukturen, beispielsweise an einer Fahrzeugkarosserie, an einem Roboterarmträger oder an einem Maschinengehäuse befestigt. Der Getriebeaußenring kann beispielsweise ein Circularspline oder ein Dynamicspline eines Spannungswellengetriebes oder das Hohlrad eines Planetengetriebes sein.

Zumeist weist der Getriebeaußenring axiale Durchgangsbohrungen für Befestigungsschrauben auf, mittels denen der Getriebeaußenring beispielsweise an ein Gehäusebauteil angeschraubt werden kann.

Aus DE 102015 11 2 695 B3 ist ein Aktuator bekannt, der einen Antriebsmotor, ein dem Antriebsmotor triebtechnisch nachgeschaltetes Getriebe, das koaxial zum Antriebsmotor angeordnet ist, und der ein Abtriebselement aufweist. Der gesamte Aktuator kann als fertig montierte und funktionsfähige Baueinheit an ein mittels des Aktuators anzutreibendes System, das eine Antriebswelle aufweist, angekoppelt werden, wobei eine drehstarre Verbindung des Abtriebselements mit der Antriebswelle herstellbar ist, ohne hierfür Teile des Aktuators demontieren zu müssen. Bei einer Ausführungsform ist ein Dynamicspline des als Spannungswellengetriebe ausgebildeten Getriebes drehfest in einem Aktuatorgehäuse befestigt.

Aus DE 10 2016 113 687 A1 ist ein Spannungswellengetriebe mit einem innenverzahnten Hohlrad bekannt, das dazu ausgebildet und bestimmt ist, entlang einer Einpressrichtung in eine Aufnahme eines Getriebegehäuses eingepresst zu werden, wobei das Hohlrad vorzugsweise ausschließlich durch den Einpressvorgang drehfest in dem Getriebegehäuse befestigt wird, ohne dass ein zusätzliches Befestigen des Hohlrades, beispielsweise durch Herstellen einer Stoffschlussverbindung, beispielweise durch Löten, Schweißen oder Kleben, oder einer zusätzlichen anderen Verbindung, wie beispielsweise durch Schrauben, erfolgt.

Aus EP 3 334 949 B1 ist eine Robotergelenkeinheit bekannt, bei der ein Getriebeaußenring eines Getriebes mittels eines Verbindungselementes kraftschlüssig an einer antriebsseitigen Struktur befestigt ist. Das Verbindungselement ist in einem Ringraum zwischen der antriebsseitigen Struktur und dem Getriebeaußenring angeordnet, wobei die antriebsseitige Struktur zwei Umfangsführungen aufweist, die den Getriebeaußenring beim Einpressen in die antriebsseitige Struktur radial führen und die radiale Position des Getriebeaußenrings vorgeben.

Beim Zusammenbau einer herkömmlichen Getriebevorrichtung ist streng darauf zu achten, dass die Getriebebauteile korrekt zueinander ausgerichtet sind, wobei zumeist nur sehr geringe Toleranzen zugelassen sind. Beispielsweise betragen die zulässigen Toleranzen für den Exzentrizitätsfehler der den Wellengenerator antreibenden Antriebswelle eines Spannungswellengetriebes in Abhängigkeit von der Baugröße (bei größeren Baugrößen sind die Toleranzen etwas größer als bei kleineren Baugrößen) nur wenige Mikrometer. Insbesondere ist es beispielsweise bei einem Spannungswellengetriebe äußerst wichtig, dass der innenverzahnte Getriebeaußenring, der Flexspline und der Wellengenerator koaxial zueinander angeordnet sind. Analog ist es bei einem Planetengetriebe äußerst wichtig, dass der das Hohlrad bildende Getriebeaußenring, der Planetenträger und das Sonnenrad präzise koaxial zueinander angeordnet sind.

In dem oben bereits erwähnten Europäischen Patent EP 3 334 949 B1 ist beispielsweise beschrieben, dass an die in der Robotik verwendeten Getriebe, wie beispielsweise Wellgetriebe, hohe Anforderungen hinsichtlich der Maßhaltigkeit gestellt sind und daher der Getriebeaußenring nicht eingepresst, sondern axial angeschraubt werden soll, um Toleranzabweichungen durch Radialkräfte zu vermeiden, die durch das Einpressen verursacht werden.

Es hat sich gezeigt, dass Getriebe eine verringerte Lebensdauer aufweisen, wenn die vorgegebenen Einbautoleranzen der Getriebebauteile nicht eingehalten werden.

Es ist daher die Aufgabe der vorliegenden Erfindung, eine Getriebevorrichtung anzugeben, die eine lange Lebensdauer des Getriebes ermöglicht.

Die Aufgabe wird durch eine Getriebevorrichtung der eingangs genannten Art gelöst, die dadurch gekennzeichnet ist, dass der Getriebeaußenring relativ zu dem Gehäusebauteil radial beweglich befestigt ist.

In erfindungsgemäßer Weise wurde erkannt, dass der aus dem Stand der Technik bekannte Ansatz, den Getriebeaußenring beim Zusammenbau des Getriebes möglichst präzise relativ zu den übrigen Getriebebauteilen auszurichten, nicht nur besonders aufwändig ist, sondern in den üblichen Produktionsprozessen auch Umsetzbarkeitsgrenzen findet.

In erfindungsgemäßer Weise wurde weiter erkannt, dass es durch eine radiale Beweglichkeit des Getriebeaußenrings relativ zu dem Strukturbauteil, das insbesondere ein Gehäusebauteil sein kann, im Betrieb des Getriebes eine Selbstzentrierung des Getriebeaußenrings erreicht wird; dies selbst dann, wenn der Getriebeaußenring unmittelbar nach dem Zusammenbau des Getriebes eine außerhalb der üblichen Toleranzen liegende Position, insbesondere einen Achsversatz, relativ zu den übrigen Getriebebauteilen aufweist.

Es hat sich gezeigt, dass die Belastungen auf die einzelnen Getriebebauteile, beispielsweise auf den Wellengenerator eines als Spannungswellengetriebe ausgebildeten Getriebes, bei einer erfindungsgemäßen Getriebevorrichtung im Vergleich zu herkömmlichen Getriebevorrichtungen, selbst wenn diese Positions- und Winkelabweichungen des Getriebeaußenrings innerhalb des zulässigen Toleranzbereichs aufweisen, erheblich gesenkt sind. Die erfindungsgemäße Getriebevorrichtung hat daher den ganz besonderen Vorteil, dass insbesondere der Verschleiß der Lager und der ineinandergreifenden Verzahnungen reduziert sind und die Lebensdauer der Getriebevorrichtung erhöht ist.

Darüber hinaus hat die Erfindung den ganz besonderen Vorteil, dass eine kostengünstige Herstellung ermöglicht ist. Beispielsweise kann der Getriebeaußenring vergleichsweise einfach und insbesondere ohne Durchgangsbohrungen und/oder Gewindebohrungen für Befestigungsschrauben ausgebildet sein, was den Herstellungsprozess vereinfacht. Darüber hinaus ist es möglich, den Getriebeaußenring durch einen vergleichsweise einfachen Einpressvorgang (zumindest in radialer Richtung) beweglich an dem Strukturbauteil zu befestigen, wobei aufgrund der im Betrieb des Getriebes stattfindenden Selbstzentrierung des Getriebeaußenrings beim Einbau eine vergleichsweise niedrige Anforderung an die Positioniergenauigkeit relativ zu den übrigen Getriebebauteilen besteht.

Der Getriebeaußenring kann vorteilhaft dünnwandig und dadurch flexibel ausgebildet sein. Eine solche Ausführung hat den besonderen Vorteil, dass sich der Getriebeaußenring im Betrieb verformen und dadurch (zusätzlich zu dem beschriebenen Effekt der Selbstzentrierung) Positionsungenauigkeiten bei dem Einbau des Getriebeaußenrings kompensieren kann. Hierzu kann insbesondere vorgesehen sein, dass die Dicke des Außenrings in Radialrichtung (vorzugsweise gemessen von dem Zahnkopfkreis seiner Verzahnung bis zu seiner Außenmantelfläche) kleiner ist, als die Länge seiner Verzahnung in Axialrichtung.

Bei einer ganz besonders vorteilhaften Ausführung ist der Getriebeaußenring radial gegen eine Rückstellkraft, insbesondere federelastisch, beweglich an dem Strukturbauteil befestigt. Beispielsweise kann der Getriebeaußenring mittels eines Befestigungsbauteils an dem Strukturbauteil befestigt, insbesondere eingeklemmt, sein, das zumindest in radialer Richtung federelastisch ausgebildet ist.

Das Befestigungsbauteil ist vorzugsweise derart in radialer Richtung federelastisch ausgebildet, dass es am Ort der jeweils gerade miteinander in Zahneingriff stehenden Zähne der Verzahnungen (Beispielsweise der Innenverzahnung des Getriebeaußenrings mit der Außenverzahnung eines Flexsplines) in Radialrichtung eine geringere Radialkraft verursacht, als die Radialkraft, die dort bei unbelastetem Getriebe (kein Betrieb) ohnehin auf Grund der jeweiligen Getriebeparameter vorliegt. Hintergrund ist, dass durch die gewählten Getriebeparameter, wie Zahneingriffswinkel, Vorspannung usw., auch bei unbelastetem Getriebe (kein Betrieb) radiale Kräfte auf die Verzahnungen einwirken. Eine solche Ausführung hat den ganz besonderen Vorteil, dass die federelastische radiale Beweglichkeit des Getriebeaußenrings relativ zu dem Strukturbauteil besonders gut an das jeweilige Getriebe angepasst ist.

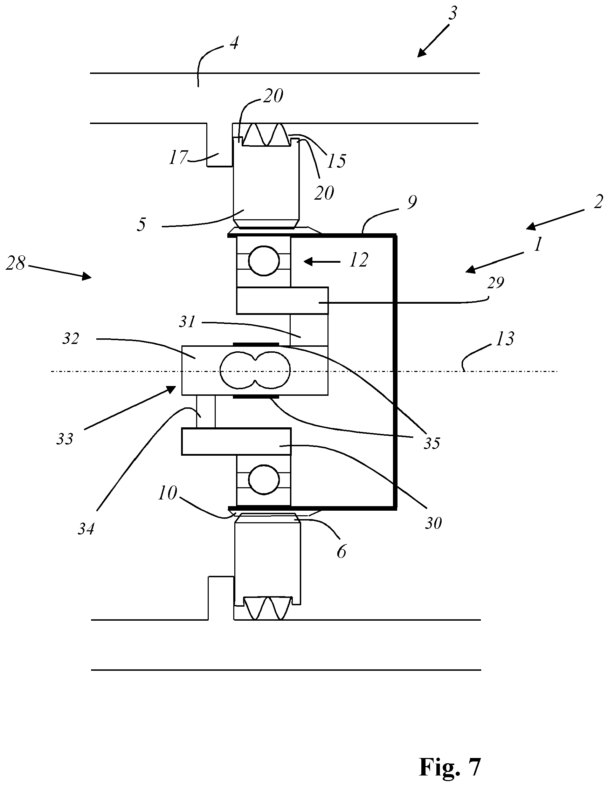

Die Radialkraft, die am Ort der jeweils gerade miteinander in Zahneingriff stehenden Zähne der Verzahnungen (Beispielsweise der Innenverzahnung des Getriebeaußenrings mit der Außenverzahnung eines Flexsplines) bei unbelastetem Getriebe (kein Betrieb) auf Grund der jeweiligen Getriebeparameter vorliegt, kann bei einem Spannungswellengetriebe beispielsweise mittels eines Mess-Wellengenerators 28 ermittelt werden, wie er in Figur 7 dargestellt ist. Ein hinsichtlich der Länge seiner Hochachse einstellbarer Mess-Wellengenerator, der einen Kraftmesssensor beinhaltet, ist nach einem eigenständigen Erfindungsgedanken besonders vorteilhaft.

Bei einer besonderen Ausführung ist der Getriebeaußenring relativ zu dem Strukturbauteil derart radial beweglich befestigt, dass der Getriebeaußenring bei einer auf den Getriebeaußenring wirkenden radialen Kraft, die denselben Betrag hat, wie die am Ort der jeweils gerade miteinander in Zahneingriff stehenden Zähne der Verzahnungen (Beispielsweise der Innenverzahnung des Getriebeaußenrings mit der Außenverzahnung eines Flexsplines) bei unbelastetem Getriebe (kein Betrieb) auf Grund der jeweiligen Getriebeparameter vorliegenden Kraft, um einen radialen Weg bewegt wird, der im Bereich des 0,0001-fachen bis 0,01-fachen, insbesondere im Bereich des 0,0001-fachen bis 0,001-fachen oder im Bereich des 0,0001-fachen bis 0,0004-fachen, des Kopfkreisdurchmessers der Innenverzahnung des Getriebeaußenrings liegt.

Vorzugsweise ist der Getriebeaußenring an dem Strukturbauteil bezogen auf axiale Drehmomente drehfest befestigt. Auf diese Weise ist gewährleistet, dass das Antriebsdrehmoment und/oder das Abtriebsdrehmoment des Getriebes über das Strukturbauteil abgestützt sind, so dass verhindert ist, dass der Getriebeaußenring im Betrieb des Getriebes relativ zu dem Strukturbauteil rotiert.

Insbesondere kann vorgesehen sein, dass der Getriebeaußenring ausschließlich an dem Strukturbauteil befestigt ist. Allerdings ist es nicht ausgeschlossen, dass der Getriebeaußenring zusätzlich auch an einem anderen Bauteil der Struktur befestigt ist.

Das Strukturbauteil kann ein Teil einer dem Getriebe übergeordneten Struktur sein. Beispielsweise kann es sich bei der Struktur um eine Maschine handeln, an die das Getriebe angeschlossen ist, oder es kann sich um eine Maschine handeln, zu der das Getriebe gehört. Das Strukturbauteil kann insbesondere ein Gehäusebauteil sein. Bei einer besonderen Ausführung ist das Strukturbauteil ein Gehäusebauteil und Teil eines Gehäuses, das zumindest das Getriebe einhaust. Insbesondere kann vorteilhaft vorgesehen sein, dass das Gehäuse außer dem Getriebe auch einen, insbesondere elektrischen, Antriebsmotor einhaust, dem das Getriebe triebtechnisch nachgeschaltet ist.

Bei einer ganz besonders vorteilhaften Ausführung ist der Getriebeaußenring reibschlüssig, insbesondere ausschließlich reibschlüssig, an dem Strukturbauteil befestigt. Eine solche Ausführung ermöglicht einen ganz besonders schnellen und einfachen Zusammenbau der Getriebevorrichtung, was insbesondere im Hinblick auf einen geringen Fertigungsaufwand vorteilhaft ist.

Bei einer besonderen Ausführung ist der Getriebeaußenring derart reibschlüssig an dem Strukturbauteil befestigt ist, dass bevor es zu einem Durchrutschen der reibschlüssigen Verbindung zwischen dem Getriebeaußenring und dem Strukturbauteil kommt, ein anderes Bauteil der Getriebevorrichtung versagt und/oder eine andere reibschlüssige Verbindung der Getriebevorrichtung durchrutscht. Eine solche Befestigung ist besonders sicher und zuverlässig.

Bei einer anderen Ausführung ist der Getriebeaußenring derart reibschlüssig an dem Strukturbauteil befestigt, dass bevor ein anderes Bauteil der Getriebevorrichtung versagt und/oder beschädigt wird, es zu einem Durchrutschen der reibschlüssigen Verbindung zwischen dem Getriebeaußenring und dem Strukturbauteil kommt. Bei einer solchen Ausführung ist das Getriebe zuverlässig vor einer Überlastung geschützt.

Wie bereits erwähnt, kann der Getriebeaußenring mittels eines Befestigungsbauteils an dem Strukturbauteil befestigt sein. Insbesondere kann beispielsweise vorgesehen sein, dass das Befestigungsbauteil in einem ringförmigen Spalt zwischen dem Getriebeaußenring und dem Strukturbauteil angeordnet ist.

Das Befestigungsbauteil kann ringförmig ausgebildet sein. Insbesondere kann das Befestigungsbauteil als Toleranzring, beispielsweise aus Federstahl, ausgebildet sein oder einen Toleranzring, beispielsweise aus Federstahl, aufweisen.

Das Befestigungsbauteil kann als geschlitztes Klemmbauteil, insbesondere als geschlitzter Ring, insbesondere Kunststoffring, ausgebildet sein, oder ein geschlitztes Klemmbauteil, insbesondere einen geschlitzten Ring, insbesondere Kunststoffring, aufweisen. Alternativ kann das Befestigungsbauteil als ungeschlitztes Ringsegment ausgebildet sein oder ein ungeschlitztes Ringsegment aufweisen.

Ganz allgemein kann vorteilhaft vorgesehen sein, dass das Befestigungsbauteil zumindest in Radialrichtung flexibel ausgebildet ist.

Insbesondere um ein Abstützen der im Betrieb des Getriebes auf den Getriebeaußenring wirkenden Drehmomente an dem Strukturbauteil zu ermöglichen, ist das Befestigungsbauteil vorzugsweise zumindest bezogen auf axiale Drehmomente torsionssteif ausgebildet. Mit dem Begriff axiales Drehmoment ist ein Drehmoment gemeint, dessen Vektor (Kreuzprodukt aus Ortsvektor und Kraftvektor) in Axialrichtung ausgerichtet ist. Unter der Axialrichtung wird die Richtung der Achse verstanden, um die im Betrieb des Getriebes wenigstens ein Getriebebauteil rotiert. Bei einem Spannungswellengetriebe ist die Axialrichtung die Richtung entlang der sich die Rotationsachse des Wellengenerators erstreckt. Insbesondere kann das Getriebe derart ausgebildet sein, dass auf eine um eine in Axialrichtung ausgerichtete Achse rotierbare Antriebswelle ein axiales Antriebsdrehmoment ausgeübt wird und/oder dass an einer in Axialrichtung ausgerichteten Achse rotierbare Abtriebswelle das Abtriebsdrehmoment anliegt.

Ganz allgemein kann das Befestigungsbauteil als Klemmbauteil ausgebildet sein oder ein Klemmbauteil aufweisen. Das Klemmbauteil ist vorzugsweise dazu ausgebildet, einerseits eine Reibschlussverbindung zu dem Getriebeaußenring und andererseits eine Reibschlussverbindung zu dem Strukturbauteil herzustellen, um den Getriebeaußenring an dem Strukturbauteil zu befestigen.

Ganz allgemein kann das Klemmbauteil dazu ausgebildet sein, einerseits eine Reib-, Form- und/oder Stoffschlussverbindung zu dem Getriebeaußenring und andererseits eine Reib-, Form- und/oder Stoffschlussverbindung zu dem Strukturbauteil herzustellen, um den Getriebeaußenring an dem Strukturbauteil zu befestigen.

Um eine radiale Beweglichkeit des Getriebeaußenrings relativ zu dem Strukturbauteil zu ermöglichen, kann das Befestigungsbauteil aus einem Elastomermaterial hergestellt sein oder ein Elastomermaterial aufweisen.

Bei einer besonderen Ausführung weist das Befestigungsbauteil eine Wabenstruktur oder eine Gitterstruktur auf. Die Wabenstruktur bzw. Gitterstruktur ist vorzugsweise radial elastisch verformbar ausgebildet. Das Befestigungsbauteil kann alternativ oder zusätzlich elastisch verformbare Speichen aufweisen.

Bei einer besonderen Ausführung weist das Befestigungsbauteil eine sich radial erstreckende, wellenförmige oder zickzackförmige Wandung auf. Durch die wellenförmige oder zickzackförmige Form der Wandung kann in einfacher Weise eine radiale Elastizität erreicht werden.

Ganz allgemein kann vorteilhaft vorgesehen sein, dass das Befestigungsbauteil als Feder ausgebildet ist oder wenigstens eine Feder aufweist.

Bei einer besonders robusten Ausführung ist das Befestigungsbauteil einstückig hergestellt. Beispielsweise kann das Befestigungsbauteil durch Guss, Spritzguss oder additive Fertigung, insbesondere aus einem elastischen Material, hergestellt sein. Alternativ kann das Befestigungsbauteil aus einem einzigen Stück Rohmaterial, beispielsweise durch spanende Herstellungsverfahren, wie Drehen, Fräsen und/oder Bohren, hergestellt sein.

Bei einer ganz besonders vorteilhaften Ausführung ist der Getriebeaußenring aus einem anderen Material hergestellt als das Strukturbauteil. Auf diese Weise kann der Getriebeaußenring im Hinblick auf eine lange Lebensdauer der Verzahnung ausgelegt sein, während das Strukturbauteil im Hinblick auf eine andere Eigenschaft, beispielsweise im Hinblick auf ein möglichst geringes Gewicht, ausgebildet sein kann. Beispielsweise kann der Getriebeaußenring aus Stahl gebildet sein, während das Strukturbauteil aus Aluminium oder einer Aluminiumlegierung gebildet ist.

Wie oben bereits erläutert ist, kann der Getriebeaußenring ohne Befestigungsschrauben an dem Strukturbauteil befestigt sein. Im Hinblick auf einen möglichst geringen Fertigungsaufwand kann daher vorteilhaft vorgesehen sein, dass der Getriebeaußenring frei von Bohrungen für Befestigungsschrauben ist und/oder dass die Getriebevorrichtung frei von Schraubverbindungen zur Befestigung des Getriebeaußenrings ist.

Vorzugsweise ist der Getriebeaußenring relativ zu dem Strukturbauteil axial unbeweglich befestigt, während gleichzeitig die radiale Beweglichkeit des Getriebeaußenrings relativ zu dem Strukturbauteil ermöglicht ist. Eine solche Ausführung hat insbesondere den ganz besonderen Vorteil, dass durch die radiale Beweglichkeit des Getriebeaußenrings relativ zu dem Strukturbauteil, im Betrieb des Getriebes die bereits erwähnte Selbstzentrierung des Getriebeaußenrings erreicht wird, während jedoch eine axiale Verschiebung des Getriebeaußenrings relativ zu einem anderen Getriebebauteil, das mit dem Getriebeaußenring in unmittelbarem Zahneingriff steht, beispielsweise eine axiale Verschiebung des Getriebeaußenrings relativ zu einem Flexspline (bei einer Ausbildung des Getriebes als Spannungswellengetriebe), vermieden ist. Auf diese Weise werden in vorteilhafter Weise insbesondere Zahneingriffsstörungen zwischen der Innenverzahnung des Getriebeaußenrings und der Verzahnung des anderen Getriebebauteils vermieden.

Bei einer besonderen Ausführung ist ein Axialanschlag vorhanden, an dem ein Gegenaxialanschlag des Getriebeaußenrings axial anliegt. Auf diese Weise ist die axiale Sollposition des Getriebeaußenrings definiert, wobei sichergestellt ist, dass sich der Getriebeaußenring im Betrieb des Getriebes nicht axial über den Axialanschlag hinaus aus der Sollposition heraus bewegen kann. Insbesondere kann vorteilhaft vorgesehen sein, dass das Strukturbauteil den Axialanschlag aufweist. Es ist alternativ oder zusätzlich auch möglich, dass das Befestigungsbauteil den Gegenaxialanschlag aufweist, insbesondere wenn zusätzlich sichergestellt ist, dass sich das Befestigungsbauteil axial nicht relativ zu dem Getriebeaußenring bewegen kann, was beispielsweise mittels wenigstens eines Vorsprungs realisiert sein kann, der das Befestigungsbauteil relativ zu dem Getriebeaußenring axial fixiert. Der Axialanschlag und der Gegenaxialanschlag sind vorzugsweise derart ausgebildet und angeordnet, dass sie eine radiale Bewegung des Getriebeaußenrings relativ zu dem Strukturbauteil nicht behindern.

Bei dem Getriebe kann es sich in ganz besonders vorteilhafter Weise um ein Dreiwellengetriebe handeln.

Wie bereits erwähnt, kann das Getriebe beispielsweise als Spannungswellengetriebe ausgebildet sein. Insbesondere kann vorteilhaft vorgesehen sein, dass der Getriebeaußenring ein Circularspline oder ein Dynamicspline des Spannungswellengetriebes ist.

Das Spannungswellengetriebe kann als Topfgetriebe oder als Hutgetriebe ausgebildet sein und insoweit einen topfförmigen oder hutförmigen Flexspline aufweisen. Alternativ kann das das Spannungswellengetriebe als Ringgetriebe ausgebildet sein und einen ringförmigen Flexspline aufweisen.

Wie ebenfalls bereits erwähnt, kann das Getriebe als Planetengetriebe ausgebildet sein. Alternativ sind grundsätzlich auch andere Getriebearten, die einen innenverzahnten Getriebeaußenring aufweisen, möglich.

Insbesondere kann der Getriebeaußenring als ein starres, ringförmiges und innenverzahntes Hohlrad ausgebildet sein.

Von ganz besonderem Vorteil ist ein Aktuator, der einen, insbesondere elektrischen, Antriebsmotor und eine erfindungsgemäße Getriebevorrichtung aufweist. Insbesondere kann vorteilhaft vorgesehen sein, dass das Getriebe dem Antriebsmotor triebtechnisch nachgeschaltet ist. Bei einer besonderen Ausführung sind das Getriebe und der Antriebsmotor in einem gemeinsamen Gehäuse angeordnet, das das Strukturbauteil aufweist, an dem der Getriebeaußenring befestigt ist.

Ganz besonders vorteilhaft, insbesondere im Hinblick auf eine lange Lebensdauer, ist ein Robotergelenk, welches eine erfindungsgemäße Getriebevorrichtung oder einen erfindungsgemäßen Aktuator aufweist. Aufgrund der besonderen Befestigung des Getriebeaußenrings ist eine besonders bauraumsparende Ausbildung des Robotergelenks ermöglicht.

Analog ist ein Roboter besonders vorteilhaft, der eine erfindungsgemäße Getriebevorrichtung oder einen erfindungsgemäßen Aktuator aufweist.

Ganz besonders vorteilhaft ist, insbesondere im Hinblick auf eine lange Lebensdauer, außerdem ein Fahrwerk, insbesondere aktives Fahrwerk für ein Kraftfahrzeug, das eine erfindungsgemäße Getriebevorrichtung oder einen erfindungsgemäßen Aktuator aufweist. Aufgrund der besonderen Befestigung des Getriebeaußenrings ist eine besonders bauraumsparende Ausbildung des Fahrwerks ermöglicht.

Ganz besonders vorteilhaft ist, insbesondere im Hinblick auf eine lange Lebensdauer, außerdem eine Lenkung, insbesondere PKW-Lenkung oder LKW-Lenkung, die eine erfindungsgemäße Getriebevorrichtung oder einen erfindungsgemäßen Aktuator aufweist. Aufgrund der besonderen Befestigung des Getriebeaußenrings ist eine besonders bauraumsparende Ausbildung der Lenkung ermöglicht.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine Getriebevorrichtung nach dem Stand der Technik,
- Fig. 2: ein erstes Ausführungsbeispiel einer erfindungsgemäßen Getriebevorrichtung,
- Fig. 3: ein zweites Ausführungsbeispiel einer erfindungsgemäßen Getriebevorrichtung,
- Fig. 4: ein drittes Ausführungsbeispiel einer erfindungsgemäßen Getriebevorrichtung,
- Fig. 5: ein viertes Ausführungsbeispiel einer erfindungsgemäßen Getriebevorrichtung,
- Fig. 6: ein Ausführungsbeispiel eines erfindungsgemäßen Aktuators, und
- Fig. 7: ein Ausführungsbeispiel eines erfindungsgemäßen Aktuators, bei dem der Wellengenerator für eine Kraftmessung durch einen Mess-Wellengenerator ersetzt ist.

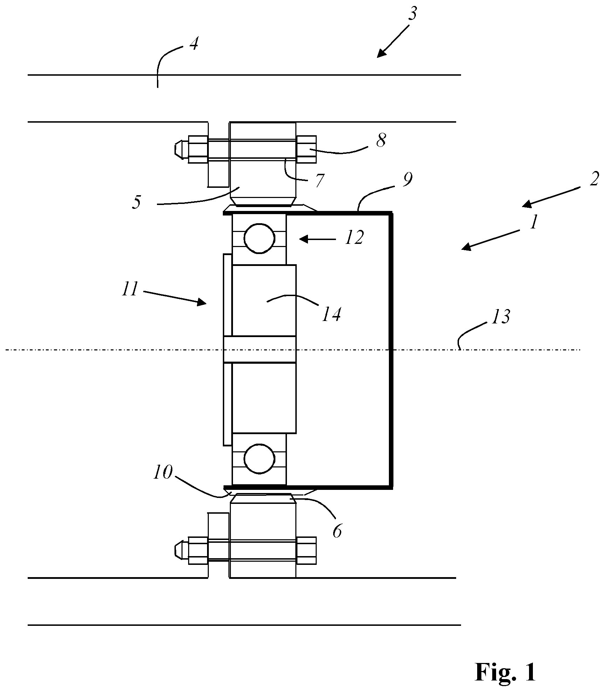

Figur 1 zeigt eine Getriebevorrichtung nach dem Stand der Technik.

Die Getriebevorrichtung weist ein als Spannungswellengetriebe 1 ausgebildetes Getriebe 2 und ein Strukturbauteil 3 in Form eines rohrförmigen Gehäusebauteils 4 auf, an dem das Getriebe 2 befestigt ist.

Das Spannungswellengetriebe 1 weist einen starren, ringförmigen Getriebeaußenring 5 auf, der eine Innenverzahnung 6 aufweist und der den Circularspline des Spannungswellengetriebes 1 bildet. Der Getriebeaußenring 5 hat mehrere axiale Durchgangsbohrungen 7 für Befestigungsschrauben 8, mittels denen der Getriebeaußenring 5 in dem Gehäusebauteil 4 angeschraubt ist.

Das Spannungswellengetriebe 1 weist außerdem einen topfförmigen Flexspline 9 auf. Der Flexspline 9 weist an seinem freien Ende eine Außenverzahnung 10 auf. In dem außenverzahnten Flexspline 9 ist ein elliptischer Wellengenerator 11 angeordnet. Der Wellengenerator 11 weist ein radialflexibles Wälzlager 12 und einen (in einer zur Rotationsmittelachse 13 senkrechten Ebene) elliptischen Verformungskörper 14 auf.

Der Wellengenerator 11 formt den Flexspline 9 zu einer elliptischen Form, um die Außenverzahnung 10 des Flexsplines 9 an jedem Ende der Ellipsen-Hauptachse, also an zwei bezogen auf die Rotationsmittelachse 13 des Spannungswellengetriebes 1 achsensymmetrisch gegenüberliegenden Stellen, mit der Innenverzahnung 6 des Getriebeaußenrings 5 in Eingriff zu bringen.

Der Verformungskörper 14 ist mittels des Wälzlagers 12 rotierbar gelagert.

Wenn der Verformungskörper 14 rotiert wird, gelangen einige Zähne der Außenverzahnung 10 an gegenüberliegenden Stellen umlaufend in und außer Eingriff mit den Zähnen der Innenverzahnung 6, wobei sich Zähne der Außenverzahnung 10 forflaufend radial um eine Strecke bewegen, die etwas größer als ihre Zahnhöhe ist. Die Rotation des Verformungskörper 14 verursacht eine untersetzte Rotation des Flexsplines 9. Beispielsweise kann der Verformungskörper 14 als Getriebeantrieb fungieren, während der Flexspline als Getriebeabtrieb fungiert. Hierzu kann der Verformungskörper 14 einem (nicht dargestellten), insbesondere elektrischen, Antriebsmotor triebtechnisch nachgeschaltet sein.

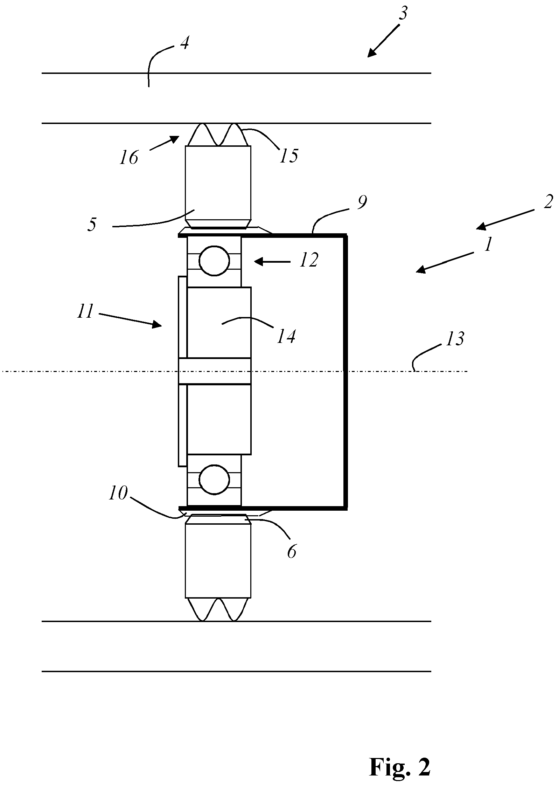

Figur 2 zeigt ein erstes Ausführungsbeispiel einer erfindungsgemäßen Getriebevorrichtung.

Im Gegensatz zu der in Figur 1 dargestellten herkömmlichen Getriebevorrichtung ist der Getriebeaußenring 5 radial beweglich an dem Strukturbauteil 3 befestigt. Hierzu weist die Getriebevorrichtung ein ringförmiges Befestigungsbauteil 15 auf, das in einem ringförmigen Spalt 16 zwischen dem Getriebeaußenring 5 und dem Strukturbauteil 3 angeordnet ist und das in radialer Richtung federelastisch ausgebildet ist. Das Befestigungsbauteil 15 wirkt als Klemmbauteil, das einerseits eine Reibschlussverbindung zu dem Getriebeaußenring 5 und andererseits eine Reibschlussverbindung zu dem Strukturbauteil 3 herstellt, um den Getriebeaußenring 5 an dem Strukturbauteil zu befestigen.

Der Getriebeaußenring 5 wurde durch einen vergleichsweise einfachen Einpressvorgang an dem Strukturbauteil 3 befestigt, wobei aufgrund der im Betrieb des Getriebes 2 stattfindenden Selbstzentrierung des Getriebeaußenrings 5 relativ zu dem Wellengenerator 11 und dem Flexspline 9 beim Einbau eine vergleichsweise niedrige Anforderung an die Positioniergenauigkeit des Getriebeaußenrings relativ zu den übrigen Getriebebauteilen besteht.

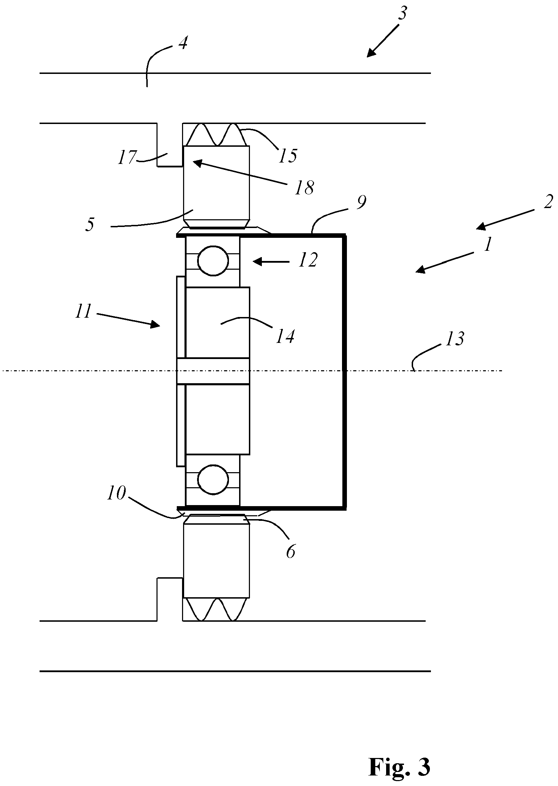

Figur 3 zeigt ein zweites Ausführungsbeispiel einer erfindungsgemäßen Getriebevorrichtung, die im Wesentlichen genauso aufgebaut ist, wie das in Figur 2 dargestellte erste Ausführungsbeispiel.

Allerdings weist das Strukturbauteil 3 des zweiten Ausführungsbeispiels zusätzlich einen Axialanschlag 17 auf, an dem ein durch einen Abschnitt einer Seitenwand des Getriebeaußenrings 5 gebildeten Gegenaxialanschlag 18 des Getriebeaußenrings 5 axial anliegt. Auf diese Weise ist die axiale Sollposition des Getriebeaußenrings 5 definiert, wobei sichergestellt ist, dass sich der Getriebeaußenring 5 im Betrieb des Getriebes 2 nicht axial über den Axialanschlag 17 hinaus aus der Sollposition heraus bewegen kann.

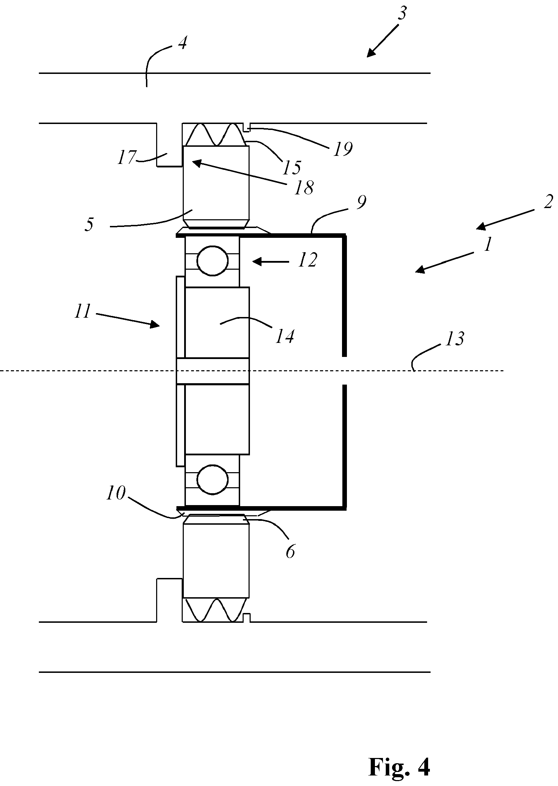

Fig. 4 zeigt ein drittes Ausführungsbeispiel einer erfindungsgemäßen Getriebevorrichtung, die im Wesentlichen genauso aufgebaut ist, wie das in Figur 3 dargestellte zweite Ausführungsbeispiel.

Allerdings weist das das Strukturbauteil 3 des dritten Ausführungsbeispiels zusätzlich einen umlaufenden Strukturbauteil-Sicherungsvorsprung 19 auf, der das Befestigungsbauteil 15 relativ zu dem Strukturbauteil 3 zusätzlich axial in Position hält.

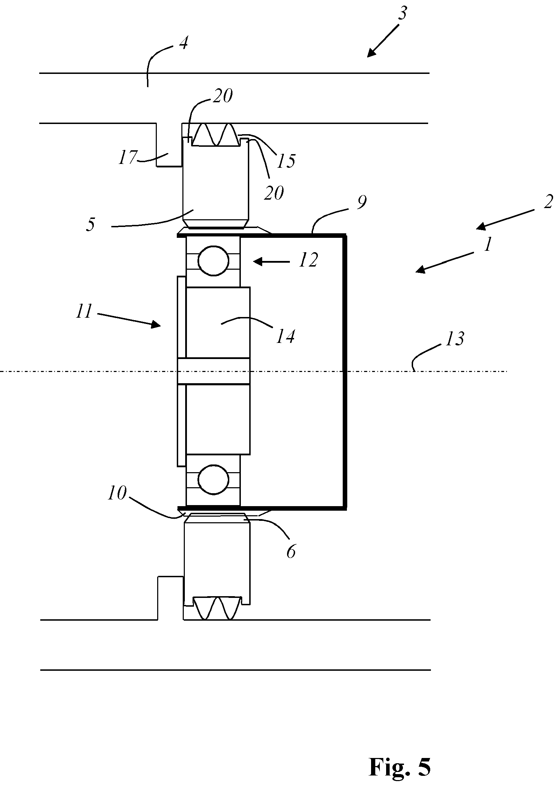

Fig. 5 zeigt ein viertes Ausführungsbeispiel einer erfindungsgemäßen Getriebevorrichtung, die ähnlich aufgebaut ist, wie das in Figur 4 dargestellte dritte Ausführungsbeispiel.

Allerdings weist der Getriebeaußenring 5 zusätzlich auf seinem Außenumfang zwei Getriebeaußenring-Sicherungsvorsprünge 20 auf, die den Getriebeaußenring 5 relativ zu dem Befestigungsbauteil 15 axial in Position halten. Außerdem weist das das Strukturbauteil 3 des dritten Ausführungsbeispiels bei diesem Ausführungsbeispiel keinen umlaufenden Strukturbauteil-Sicherungsvorsprung 19 auf.

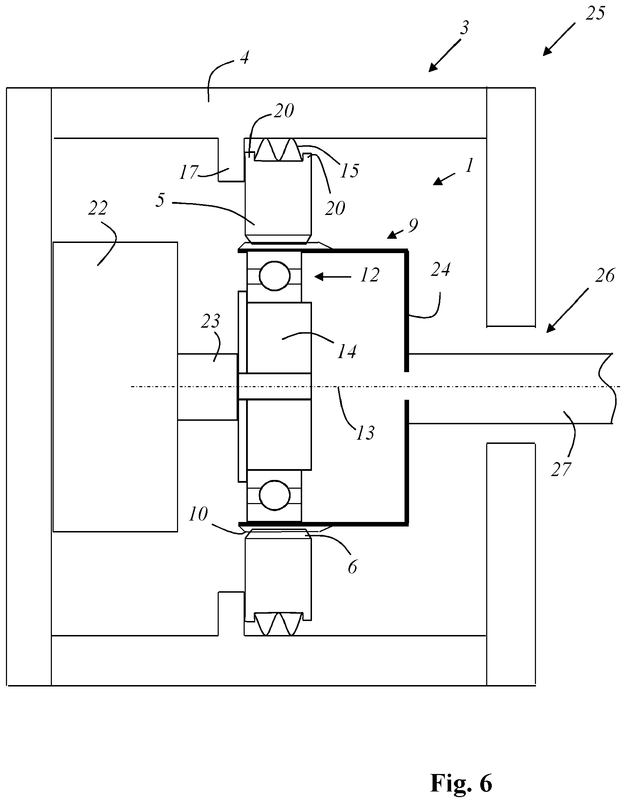

Figur 6 zeigt ein Ausführungsbeispiel eines erfindungsgemäßen Aktuators 21, der eine erfindungsgemäße Getriebevorrichtung gemäß dem vierten Ausführungsbeispiel sowie einen, beispielsweise elektrischen, Antriebsmotor 22 beinhaltet.

Das Strukturbauteil 4 ist Teil eines Gehäuses 25, das das Getriebe 2 und den Antriebsmotor 22 einhaust. Ein Motorgehäuse des Antriebsmotors 22 ist an der Innenseite des Gehäuses 25 drehfest befestigt.

Das Getriebe 2 der Getriebevorrichtung ist dem Antriebsmotor 22 triebtechnisch nachgeschaltet. Hierzu ist eine Abtriebswelle 23 des Antriebsmotors 22 drehmomentübertragend und mit dem Verformungskörper 14 verbunden.

An den Boden 24 des topfförmigen Flexsplines 9 ist eine Abtriebswelle 27 drehfest angekoppelt, die durch eine Öffnung 26 des Gehäuses 25 ragt.

Figur 7 zeigt ein Ausführungsbeispiel eines erfindungsgemäßen Aktuators, welches im Wesentlichen dem vierten Ausführungsbeispiel entspricht, wobei jedoch der Wellengenerator 11 für eine Kraftmessung durch einen Mess-Wellengenerator 28 ersetzt ist. Der Mess-Wellengenerator 28 weist ein erstes Ovalsegment 29 und ein zweites Ovalsegment 30 auf. Das erste Ovalsegment 29 stützt sich über ein starres Stützteil 31 an einem Ende eines Verformungskörpers 32 eines Kraftmesssensors 33 ab. Der Verformungskörper 32 kann nach dem Doppelbiegebalkenprinzip aufgebaut sein, wobei jedoch auch andere Ausführungen möglich sind. Das zweite Ovalsegment 30 stützt sich über einen Linearversteller 34 an dem anderen Ende des Verformungskörpers 32 des Kraftmesssensors 33 ab. Auf den Verformungskörper 32 sind Dehnungsmessstreifen 35 aufgeklebt. Mittels des Linearverstellers 34 kann der radiale Abstand der Ovalsegmente 29, 30 verändert werden. Mittels des Kraftmesssensors 33 kann die in Radialrichtung auf den Mess-Wellengenerator 28 wirkende Kraft gemessen werden. Insbesondere kann die Radialkraft gemessen werden, die am Ort der jeweils gerade miteinander in Zahneingriff stehenden Zähne der Verzahnungen (Beispielsweise der Innenverzahnung des Getriebeaußenrings mit der Außenverzahnung eines Flexsplines) bei unbelastetem Getriebe (kein Betrieb) auf Grund der jeweiligen Getriebeparameter vorliegt. Hierzu wird der Mess-Wellengenerator 28 mittels des Linearverstellers 34 so eingestellt, dass der Abstand der Außenflächen des ersten Ovalsegments 29 und des zweiten Ovalsegments 30 der Länge der Hochachse des für den Betrieb vorgesehenen Wellengenerators 11 entspricht.

### Bezugszeichenliste:

- 1: Spannungswellengetriebe
- 2: Getriebe
- 3: Strukturbauteil
- 4: Gehäusebauteil
- 5: Getriebeaußenring
- 6: Innenverzahnung
- 7: Durchgangsbohrung
- 8: Befestigungsschraube
- 9: Flexspline
- 10: Außenverzahnung
- 11: Wellengenerator
- 12: radial flexibles Wälzlager
- 13: Rotationsmittelachse
- 14: Verformungskörper
- 15: Befestigungsbauteil
- 16: Spalt
- 17: Axialanschlag
- 18: Gegenaxialanschlag
- 19: Strukturbauteil-Vorsprung
- 20: Getriebeaußenring-Vorsprung
- 21: Aktuator
- 22: Antriebsmotor
- 23: Antriebswelle
- 24: Boden
- 25: Gehäuse
- 26: Öffnung
- 27: Abtriebswelle
- 28: Mess-Wellengenerator
- 29: erstes Ovalsegment
- 30: zweites Ovalsegment
- 31: Stützteil
- 32: Verformungskörper
- 33: Kraftmesssensor
- 34: Linearversteller
- 35: Dehnungsmessstreifen

## Patentansprüche

1. Getriebevorrichtung mit einem Getriebe (2), das einen innenverzahnten Getriebeaußenring (5) aufweist, und mit einem den Getriebeaußenring (5) umgebenden Strukturbauteil (3), insbesondere Gehäusebauteil (4), an dem der Getriebeaußenring (5) drehfest befestigt ist, **dadurch gekennzeichnet, dass** der Getriebeaußenring (5) relativ zu dem Strukturbauteil (3) radial beweglich befestigt ist.

2. Getriebevorrichtung nach Anspruch 1, **dadurch gekennzeichnet, dass** die Getriebevorrichtung wenigstens eines der nachfolgenden Merkmale a bis c aufweist:
a. der Getriebeaußenring (5) ist radial gegen eine Rückstellkraft, insbesondere federelastisch, beweglich an dem Strukturbauteil (3) befestigt,
b. der Getriebeaußenring (5) ist an dem Strukturbauteil (3) bezogen auf axiale Drehmomente drehfest befestigt,
c. der Getriebeaußenring (5) ist ausschließlich an dem Strukturbauteil (3) befestigt.

3. Getriebevorrichtung nach Anspruch 1 oder 2, **dadurch gekennzeichnet, dass**
a. der Getriebeaußenring (5) reibschlüssig, insbesondere ausschließlich reibschlüssig, an dem Strukturbauteil (3) befestigt ist, oder dass
b. der Getriebeaußenring (5) derart reibschlüssig, insbesondere ausschließlich reibschlüssig, an dem Strukturbauteil (3) befestigt ist, dass bevor es zu einem Durchrutschen der reibschlüssigen Verbindung zwischen dem Getriebeaußenring (5) und dem Strukturbauteil (3) kommt, ein anderes Bauteil der Getriebevorrichtung versagt und/oder eine andere reibschlüssige Verbindung der Getriebevorrichtung durchrutscht, oder dass
c. der Getriebeaußenring (5) derart reibschlüssig, insbesondere ausschließlich reibschlüssig, an dem Strukturbauteil (3) befestigt ist, dass bevor ein anderes Bauteil der Getriebevorrichtung versagt und/oder beschädigt wird, es zu einem Durchrutschen der reibschlüssigen Verbindung zwischen dem Getriebeaußenring (5) und dem Strukturbauteil (3) kommt.

4. Getriebevorrichtung nach einem der Ansprüche 1 bis 3, **dadurch gekennzeichnet, dass** der Getriebeaußenring (5) mittels eines Befestigungsbauteils (15) an dem Strukturbauteil (3) befestigt ist.

5. Getriebevorrichtung nach Anspruch 4, **dadurch gekennzeichnet, dass** die Getriebevorrichtung wenigstens eines der nachfolgenden Merkmale a bis m aufweist:
a. das Befestigungsbauteil (15) ist in Radialrichtung flexibel ausgebildet,
b. das Befestigungsbauteil (15) ist bezogen auf axiale Drehmomente torsionssteif ausgebildet,
c. das Befestigungsbauteil (15) ist als Klemmbauteil ausgebildet oder weist ein Klemmbauteil auf,
d. das Befestigungsbauteil (15) ist als geschlitztes Klemmbauteil, insbesondere als geschlitzter Kunststoffring, ausgebildet, oder das Befestigungsbauteil (15) weist ein geschlitztes Klemmbauteil, insbesondere einen geschlitzten Kunststoffring, auf,
e. das Befestigungsbauteil (15) ist als ungeschlitztes Ringsegment ausgebildet oder weist ein ungeschlitztes Ringsegment auf,
f. das Befestigungsbauteil (15) ist als Toleranzring ausgebildet oder weist einen Toleranzring auf,
g. das Befestigungsbauteil (15) ist aus einem Elastomermaterial hergestellt,
h. das Befestigungsbauteil (15) weist eine Wabenstruktur oder eine Gitterstruktur oder elastisch verformbare Speichen auf,
i. das Befestigungsbauteil (15) weist eine sich in Radialrichtung erstreckende, wellenförmige oder zickzackförmige Wandung auf,
j. das Befestigungsbauteil (15) ist als Feder ausgebildet oder weist wenigstens eine Feder auf,
k. das Befestigungsbauteil (15) ist einstückig hergestellt,
l. das Befestigungsbauteil (15) ist durch Guss, Spritzguss oder additive Fertigung hergestellt,
m. das Befestigungsbauteil (15) ist aus einem einzigen Stück Rohmaterial hergestellt.

6. Getriebevorrichtung nach einem der Ansprüche 1 bis 5, **dadurch gekennzeichnet, dass** die Getriebevorrichtung wenigstens eines der nachfolgenden Merkmale a bis c aufweist:
a. der Getriebeaußenring (5) ist aus einem anderen Material hergestellt als das Strukturbauteil (3),
b. der Getriebeaußenring (5) ist frei von Bohrungen für Befestigungsschrauben,
c. der Getriebeaußenring (5) ist frei von Durchgangsbohrungen und/oder Gewindebohrungen für Befestigungsschrauben zur Befestigung des Getriebeaußenrings (5).

7. Getriebevorrichtung nach einem der Ansprüche 1 bis 6, **dadurch gekennzeichnet, dass**
a. ein Axialanschlag (17) vorhanden ist, an dem ein Gegenaxialanschlag (18) des Getriebeaußenrings (5) axial anliegt, oder dass
b. das Strukturbauteil (3) einen Axialanschlag aufweist, an dem ein Gegenaxialanschlag (18) des Getriebeaußenrings (5) und/oder des Befestigungsbauteils (15) axial anliegt.

8. Getriebevorrichtung nach einem der Ansprüche 1 bis 7, **dadurch gekennzeichnet, dass** das Getriebe (2) ein Dreiwellengetriebe ist.

9. Getriebevorrichtung nach einem der Ansprüche 1 bis 8, **dadurch gekennzeichnet, dass** das Getriebe (2) als Spannungswellengetriebe (1) ausgebildet ist.

10. Getriebevorrichtung nach Anspruch 9, **dadurch gekennzeichnet, dass** die Getriebevorrichtung wenigstens eines der nachfolgenden Merkmale a bis c aufweist:
a. der Getriebeaußenring (5) ist ein Circularspline oder ein Dynamicspline des Spannungswellengetriebes (1),
b. das Spannungswellengetriebe (1) weist einen topfförmigen oder hutförmigen Flexspline (9) auf,
c. das Spannungswellengetriebe (1) ist als Ringgetriebe ausgebildet.

11. Getriebevorrichtung nach einem der Ansprüche 1 bis 10, **dadurch gekennzeichnet, dass** das Getriebe (2) als Planetengetriebe ausgebildet ist.

12. Getriebevorrichtung nach einem der Ansprüche 1 bis 11, **dadurch gekennzeichnet, dass** das Strukturbauteil (3) Teil eines Gehäuses ist, das zumindest das Getriebe (2) einhaust.

13. Aktuator (21), der einen, insbesondere elektrischen, Antriebsmotor (22) und eine Getriebevorrichtung nach einem der Ansprüche 1 bis 12 aufweist, oder Aktuator (21), der einen, insbesondere elektrischen, Antriebsmotor (22) und eine Getriebevorrichtung nach einem der Ansprüche 1 bis 12 aufweist, wobei das Getriebe (2) der Getriebevorrichtung dem Antriebsmotor (22) triebtechnisch nachgeschaltet ist.

14. Robotergelenk, das eine Getriebevorrichtung nach einem der Ansprüche 1 bis 12 und/oder einen Aktuator (21) nach Anspruch 13 aufweist oder Roboter, der eine Getriebevorrichtung nach einem der Ansprüche 1 bis 12 und/oder einen Aktuator (21) nach Anspruch 13 aufweist.

15. Fahrzeugbaugruppe, insbesondere Fahrwerk, insbesondere aktives Fahrwerk für ein Kraftfahrzeug, oder Lenkung, insbesondere PKW-Lenkung oder LKW-Lenkung, die eine Getriebevorrichtung nach einem der Ansprüche 1 bis 12 und/oder einen Aktuator (21) nach Anspruch 13 aufweist.
